(19) Europäisches Patentamt
European Patent Office
Office européen des brevets

(11) **EP 3 013 896 B1**

(12) **EUROPEAN PATENT SPECIFICATION**

(45) Date of publication and mention
of the grant of the patent:
**21.08.2019 Bulletin 2019/34**

(51) Int Cl.:
***C08K 5/10*** *(2006.01)*   ***H01B 3/44*** *(2006.01)*
***C08L 23/08*** *(2006.01)*

(21) Application number: **14738963.9**

(22) Date of filing: **17.06.2014**

(86) International application number:
**PCT/US2014/042600**

(87) International publication number:
**WO 2014/209661 (31.12.2014 Gazette 2014/53)**

(54) **VOLTAGE-STABILIZED POLYMERIC COMPOSITIONS**

SPANNUNGS-STABILISIERTE POLYMERZUSAMMENSETZUNGEN

COMPOSITION DE POLYMÈRE STABILISÉE EN TENSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2013   US 201361839422 P**

(43) Date of publication of application:
**04.05.2016   Bulletin 2016/18**

(73) Proprietor: **Dow Global Technologies LLC**
**Midland, MI 48674 (US)**

(72) Inventors:
• **TOMER, Vivek**
**Philadelphia, PA 19130 (US)**
• **PERSON, Timothy J.**
**Pottstown, PA 19464 (US)**
• **WELSH, Dean M.**
**Midland, MI 48642 (US)**
• **BERNIUS, Mark T.**
**Bowling Green, OH 43402 (US)**

(74) Representative: **Boult Wade Tennant LLP**
**5th Floor, Salisbury Square House**
**8, Salisbury Square**
**London EC4Y 8AP (GB)**

(56) References cited:
**EP-A1- 0 074 834     EP-A2- 0 298 765**
**WO-A1-93/24940     WO-A1-2006/011784**
**US-A- 4 456 655     US-A- 4 732 722**

**Description**

A typical power cable includes one or more conductors in a cable core surrounded by one or more layers of polymeric material. Medium-voltage (6 to 36 kV), high-voltage (greater than 36 kV), and extra-high-voltage (greater than 220 kV) cables typically include a core surrounded by an inner semiconducting layer, followed by an insulating layer, and then an outer semiconducting layer, and an outermost layer (or sheath).

The load-carrying capacity of a cable system is limited, in part, by the heat transfer away from the conductor. Poly-$\alpha$-olefins, such as polyethylene, are frequently utilized in the insulating layer and/or in the semiconducting layer. Polyethylene has a low dielectric permittivity and a relatively high electrical breakdown strength.

Known are voltage-stabilizing agents for polyolefin compositions that increase electrical breakdown strength of insulating layers in power cables. Conventional voltage-stabilizing agents (such as the family of polycyclic aromatics, e.g. acenes), however, have poor compatibility with poly-$\alpha$-olefins. The art recognizes the continuous need for voltage-stabilizing agents compatible with poly-$\alpha$-olefins for (i) increased electrical breakdown strength of cable insulation material, (ii) increased reliability with existing cable designs and/or (iii) provision of high-stress designs that are able to deliver increased amounts of energy.

SUMMARY

One embodiment is a polymeric composition, comprising:

a low density polyethylene; and
an organic carboxylic ester comprising at least one aromatic ring and from 1 to 2 carboxylic alkyl ester substituents, wherein said organic carboxylic ester is selected from the group consisting of dioctyl phthalate, dinonyl phthalate, hexyl benzoate, and combinations thereof; and wherein said organic carboxylic ester is present in said polymeric composition in an amount ranging from 0.1 to 2 weight percent based on the combined weight of said low density polyethylene and said organic carboxylic ester.

Another embodiment is a coated conductor, comprising:

a conductor; and
a dielectric insulating layer,
wherein said dielectric insulating layer comprises the polymeric composition of any one of the claims.

BRIEF DESCRIPTION OF THE DRAWINGS

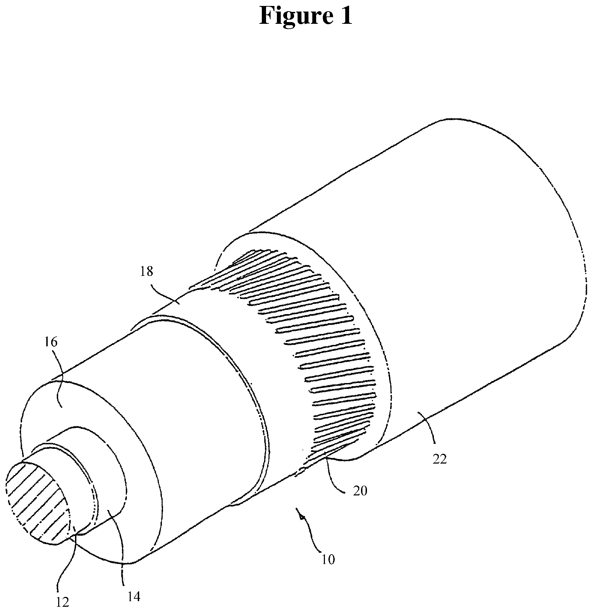

FIG. 1 is a perspective view of a power cable in accordance with an embodiment of the present disclosure.

DETAILED DESCRIPTION

The present disclosure provides a polymeric composition. The polymeric composition includes (i) a polymeric component, (ii) a voltage-stabilizing agent, and (iii) optionally other additives. The present disclosure further provides coated conductors comprising such polymeric compositions.

*Polymeric Component*

The polymeric component is an ethylene based polymer. The ethylene-based polymer is a low-density polyethylene ("LDPE"). LDPEs are generally highly branched ethylene homopolymers, and can be prepared via high pressure processes (i.e., HP-LDPE). LDPEs suitable for use herein can have a density ranging from 0.91 to 0.94 g/cm3. In various embodiments, the ethylene-based polymer is a high-pressure LDPE having a density of at least 0.915 g/cm$^3$, but less than 0.94 g/cm$^3$, or less than 0.93 g/cm$^3$. Polymer densities provided herein are determined according to ASTM International ("ASTM") method D792. LDPEs suitable for use herein can have a melt index ($I_2$) of less than 20 g / 10 min., or ranging from 0.1 to 10 g/10 min., from 0.5 to 5 g/10min., from 1 to 3 g/10 min., or an $I_2$ of 2 g/10 min. Melt indices provided herein are determined according to ASTM method D1238. Unless otherwise noted, melt indices are determined at 190 °C and 2.16 Kg (i.e., $I_2$). Generally, LDPEs have a broad molecular weight distribution ("MWD") resulting in a relatively high polydispersity index ("PDI;" ratio of weight-average molecular weight to number-average molecular weight).

The polymeric component can also comprise a poly-$\alpha$-olefin polymer. Non-limiting examples of suitable poly-$\alpha$-olefins are homopolymers and copolymers containing one or more $C_2$-$C_{20}$ (i.e., having from 2 to 20 carbon atoms) $\alpha$-olefins. For purposes of this disclosure, ethylene is considered an $\alpha$-olefin. Non-limiting examples of suitable $\alpha$-olefins

include ethylene, propylene, isobutylene, 1-butene, 1-pentene, 1-hexene, 4-methyl-1-pentene, and 1-octene. Non-limiting examples of suitable poly-$\alpha$-olefins include ethylene-based polymers, propylene-based polymers, and combinations thereof. An "ethylene-based polymer" or "polyethylene" and like terms is a polymer containing at least 50 mole percent (mol%) units derived from ethylene. A "propylene-based polymer" or "polypropylene" and like terms is a polymer containing at least 50 mol% units derived from propylene.

An ethylene-based polymer can also be present. The ethylene-based polymer may be ethylene homopolymer or an ethylene/$\alpha$-olefin interpolymer. The $\alpha$-olefin content can be from about 5, from about 10, from about 15, from about 20, or from about 25 weight percent ("wt%") to less than 50, less than about 45, less than about 40, or less than about 35 wt% based on the weight of the interpolymer. The $\alpha$-olefin content is measured by $^{13}C$ nuclear magnetic resonance (NMR) spectroscopy using the procedure described in Randall (*Rev. Macromol. Chem. Phys.*, C29 (2&3)). Generally, the greater the $\alpha$-olefin content of the interpolymer, the lower the density and the more amorphous the interpolymer, and this can translate into desirable physical and chemical properties for a protective insulation layer, as described below.

The $\alpha$-olefin in an ethylene/$\alpha$-olefin interpolymer can be any $C_{3-20}$ linear, branched, or cyclic $\alpha$-olefins. Non-limiting examples of suitable of $C_{3-20}$ $\alpha$-olefins include propene, 1-butene, 4-methyl-1-pentene, 1-hexene, 1-octene, 1-decene, 1-dodecene, 1-tetradecene, 1-hexadecene, and 1-octadecene. The $\alpha$-olefins can also have or include a cyclic structure such as cyclohexane or cyclopentane, resulting in an $\alpha$-olefin such as 3-cyclohexyl-1-propene (allyl cyclohexane) and vinyl cyclohexane. Although not $\alpha$-olefins in the classical sense of the term, for purposes of this disclosure certain cyclic olefins, such as norbornene and related olefins, particularly 5-ethylidene-2-norbornene, are $\alpha$-olefins and can be used in place of some or all of the $\alpha$-olefins described above. Similarly, styrene and its related olefins (for example, $\alpha$-methylstyrene, etc.) are $\alpha$-olefins for purposes of this disclosure.

Non-limiting examples of suitable ethylene-based polymers include the following copolymers: ethylene/propylene, ethylene/butene, ethylene/1-hexene, ethylene/1-octene, ethylene/styrene, ethylene/vinyl acetate, ethylene/vinyl propionate, ethylene/vinyl isobutyrate, ethylene/vinyl alcohol, ethylene/methyl acrylate, ethylene/ethyl acrylate, ethylene/ethyl methacrylate, ethylene/butyl-acrylate copolymers ("EBA"), ethylene/allyl benzene, ethylene/allyl ether, and ethylene/acrolein; and ethylene/propylene ("EPR") rubbers.

Non-limiting examples of suitable terpolymers include ethylene/propylene/1-octene, ethylene/propylene/butene, ethylene/butene/1-octene, ethylene/propylene/diene monomer ("EPDM") and ethylene/butene/styrene. The copolymers/interpolymers can be random or blocky.

In various embodiments, the ethylene-based polymer can be used alone or in combination with one or more other types of ethylene-based polymers (e.g., a blend of two or more ethylene-based polymers that differ from one another by monomer composition and content, catalytic method of preparation, etc). If a blend of ethylene-based polymers is employed, the polymers can be blended by any in-reactor or post-reactor process.

A linear-low-density polyethylene ("LLDPE") can also be present. LLDPEs are generally ethylene-based polymers having a heterogeneous distribution of comonomer (e.g., $\alpha$-olefin monomer), and are characterized by short-chain branching. For example, LLDPEs can be copolymers of ethylene and $\alpha$-olefin monomers, such as those described above. LLDPEs suitable for use herein can have a density ranging from 0.916 to 0.925 g/cm$^3$. LLDPEs suitable for use herein can have a melt index ($I_2$) ranging from 1 to 20 g/10min., or from 3 to 8 g/10 min.

A very-low-density polyethylene ("VLDPE") can also be present. VLDPEs may also be known in the art as ultra-low-density polyethylenes, or ULDPEs. VLDPEs are generally ethylene-based polymers having a heterogeneous distribution of comonomer (e.g., $\alpha$-olefin monomer), and are characterized by short-chain branching. For example, VLDPEs can be copolymers of ethylene and $\alpha$-olefin monomers, such as one or more of those $\alpha$-olefin monomers described above. VLDPEs suitable for use herein can have a density ranging from 0.87 to 0.915 g/cm$^3$. VLDPEs suitable for use herein can have a melt index ($I_2$) ranging from 0.1 to 20 g/10 min., or from 0.3 to 5 g/10 min.

A high-density polyethylene ("HDPE") can also be present. HDPEs are ethylene-based polymers having densities greater than 0.940 g/cm$^3$. In an embodiment, the HDPE has a density from 0.945 to 0.97 g/cm$^3$, as determined according to ASTM D-792. The HDPE can have a peak melting temperature of at least 130 °C, or from 132 to 134 °C. The HDPE can have a melt index ($I_2$) ranging from 0.1 g/10 min, or 0.2 g/10 min, or 0.3 g/10 min, or 0.4 g/10 min, up to 5.0 g/10 min, or 4.0 g/10 min, or, 3.0 g/10 min or 2.0 g/10 min, or 1.0 g/10 min, or 0.5 g/10 min, as determined according to ASTM D-1238 (190 °C / 2.16 kg). Also, the HDPE can have a PDI in the range of from 1.0 to 30.0, or in the range of from 2.0 to 15.0, as determined by gel permeation chromatography.

In an embodiment, the ethylene-based polymer can comprise a combination of any two or more of the above-described ethylene-based polymers.

Production processes used for preparing ethylene-based polymers are wide, varied, and known in the art. Any conventional or hereafter discovered production process for producing ethylene-based polymers having the properties described above may be employed for preparing the ethylene-based polymers described herein. In general, polymerization can be accomplished at conditions known in the art for Ziegler-Natta or Kaminsky-Sinn type polymerization reactions, that is, at temperatures from 0 to 250 °C, or 30 or 200 °C, and pressures from atmospheric to 10,000 atmospheres (1,013 megaPascal ("MPa")). In most polymerization reactions, the molar ratio of catalyst to polymerizable compounds employed is from 10-12:1 to 10-1:1, or from 10-9:1 to 10-5:1.

Non-limiting examples of commercially available ethylene-based polymers include FLEXOMER® ethylene/1-hexene polyethylene made by The Dow Chemical Company (a VLDPE), TAFMER® by Mitsui Petrochemicals Company Limited and EXACT® by Exxon Chemical Company (homogeneously branched, linear ethylene/α-olefin copolymers), AFFINITY® and ENGAGE® polyethylene available from The Dow Chemical Company (homogeneously branched, substantially linear ethylene/α-olefin polymers), and INFUSE® polyethylene available from The Dow Chemical Company (olefin block copolymers).

In various embodiments, the low density polyethylene can be crosslinked. When it is desired to use a crosslinked poly-α-olefin, crosslinking can be accomplished by one or more of the following non-limiting procedures: free radical crosslinking (e.g., peroxide cross-linking); radiation cross-linking (e.g., electron accelerators, gamma-rays, high energy radiation, such as X-rays, microwaves, etc.); thermal crosslinking, and/or moisture-cure crosslinking (e.g., silane-graft).

*Voltage-Stabilizing Agent*

In addition to the polymeric component, the polymeric composition also includes a voltage-stabilizing agent ("VSA"). A "voltage-stabilizing agent," as used herein, is a compound which reduces the damage to a polymeric material when exposed to an electric field. Though not wishing to be bound by theory, it has been considered that a VSA may trap or deactivate electrons to inhibit electrical treeing in an insulation material, or otherwise to provide effective screening of high localized fields (near defects or contaminants) to thereby reduce the energy and/or frequency of injected electrons which may impart damage to the polyolefin. Blending the VSA with the polymeric component inhibits or otherwise retards treeing. Bounded by no particular theory, it is believed the VSA fills and/or surrounds defects in the polymeric component, the defects being points of tree initiation. Defects include voids and/or impurities present in the polymeric component.

The VSA of the present disclosure comprises an organic carboxylic ester comprising at least one aromatic ring and from 1 to 2 carboxylic alkyl ester substituents.

The organic carboxylic ester is selected from the group consisting of dioctyl phthalate, dinonyl phthalate, hexyl benzoate, and combinations thereof.

The polymeric composition contains from 0.1 wt%, preferably 0.2 wt% or preferably 0.5 wt% up to 2 wt%, preferably 1.5 wt %, or preferably 1 wt % of the VSA based on the combined weight of the low density polyethylene and the organic carboxylic ester.

The foregoing VSAs unexpectedly improve alternating current ("AC") breakdown strength in insulating layers containing the present polymeric compositions. The improvement in AC breakdown strength can be seen in the increased AC breakdown strengths exhibited in the Examples described hereafter. Such improvement in breakdown strength is also valued in direct current ("DC") applications, and the benefits of such VSAs are anticipated in DC applications as well.

Moreover, the present VSAs exhibit good solubility in the polyolefin matrix and a low migration tendency. The present VSAs can be utilized effectively with other components of the polymeric composition, in particular to cross-linking agents.

In various embodiments, the polymeric compositions containing one or more of the above VSAs can have an AC breakdown strength of at least 2,200 kV/mm, at least 2,300 kV/mm, or at least 2,400 kV/mm, and up to 3,000 kV/mm, 2,900 kV/mm, or 2850 kV/mm. AC breakdown strength is determined according to the procedure provided in the Test Methods section, below.

In an embodiment, the polymeric compositions containing one or more of the above VSAs can have an AC breakdown strength that is at least 5%, at least 10%, at least 15%, at least 20%, or at least 25% greater than a comparative polymeric composition having the same composition but lacking the VSA. In an embodiment, the polymeric composition containing one or more of the above VSAs can have an AC breakdown strength that is in the range of from 10% to 40%, or from 15% to 35% greater than a comparative polymeric composition having the same composition but lacking the VSA.

*Additives*

Any of the foregoing polymeric compositions may optionally contain one or more additives. Non-limiting examples of suitable additives include antioxidants, stabilizers, processing aids, scorch retarders, and/or cross-linking boosters. As antioxidant, sterically hindered or semi-hindered phenols, aromatic amines, aliphatic sterically hindered amines, organic phosphites, thio compounds, and mixtures thereof, can be mentioned. Typical cross-linking boosters may include compounds having a vinyl or an allyl group, e.g. triallylcyanurate, triallylisocyanurate, and di-, tri- or tetra-acrylates. As further additives, flame retardant additives, acid scavengers, inorganic fillers, water-tree retardants and other voltage stabilizers can be mentioned.

A "scorch retarder," as used herein is a compound that reduces premature crosslinking (i.e., "scorch") during extrusion of a polymer composition, at typical extrusion temperatures used, when compared to the same polymer composition extruded without said scorch retarder. Besides scorch retarding properties, the scorch retarder may simultaneously result in further effects like boosting (i.e., enhancing cross-linking performance during the cross-linking step).

The polymeric composition may comprise two or more embodiments disclosed herein.

*Coated Conductor*

The present disclosure provides articles containing the present polymeric compositions. In an embodiment, the article includes a conductor and a coating on the conductor. This forms a coated conductor. The conductor may be a single cable or a plurality of cables bound together (i.e., a cable core, or a core). The coated conductor may be flexible, semi-rigid, or rigid. Non-limiting examples of suitable coated conductors include flexible wiring such as flexible wiring for consumer electronics, a power cable, a power charger wire for cell phones and/or computers, computer data cords, power cords, appliance wiring material, and consumer electronic accessory cords.

The coating located on the conductor may be one or more inner layers such as an insulating layer and/or a shielding layer and/or a semiconducting layer. The coating may also include one or more outer layer(s) (also referred to as a "jacket" or a "sheath"). The coating includes any of the present polymer compositions as disclosed herein. As used herein, "on" includes direct contact or indirect contact between the coating (or a layer) and the conductor. "Direct contact" is a configuration whereby the coating immediately contacts the conductor with no intervening layer(s) and/or no intervening material(s) located between the coating and the conductor. "Indirect contact" is a configuration whereby an intervening layer(s) and/or an intervening structure(s) or material(s) is/are located between the conductor and the coating. The coating may wholly or partially cover or otherwise surround or encase the conductor. The coating may be the sole component surrounding the conductor. Alternatively, the coating may be one layer of a multilayer structure, jacket, or sheath encasing the conductor.

In an embodiment, a coated conductor is provided and includes a conductor, an inner layer and an outermost opaque layer (or sheath). The outermost opaque layer is the exposed layer or the layer in contact with the ambient environment. The inner layer is located between the conductor and the outermost layer. In other words, the inner layer is not exposed to the ambient environment, and/or is not exposed to sunlight. The inner layer includes the polymeric composition containing polyolefin and the VSA as disclosed above. The VSA can be any one or more of the organic carboxylic esters as disclosed herein.

In an embodiment, the inner layer (containing polyolefin and VSA) excludes layer(s) exposed to sunlight.

In an embodiment, the polymeric composition of the inner layer contains a polyethylene.

In an embodiment, the polymeric composition of the inner layer contains a crosslinked polyethylene.

In an embodiment, the coated conductor is a power cable operating at a voltage greater than 1 kV, or greater than 6 kV to 36 kV (medium-voltage), or greater than 36 kV (high-voltage), or greater than 220 kV (extra-high-voltage).

Figure 1 shows an insulated power cable 10 (i.e., a coated conductor) which includes a metallic conductor 12, an internal shielding layer 14, an insulating layer 16, an external shielding layer 18, a metallic screen 20 of wound wires or conducting bands, and an outermost layer 22 (also known as a sheath). The outermost layer 22 is opaque.

In an embodiment, the internal shielding layer 14 and/or the insulating layer 16 and/or the external shielding layer 18 are/is composed of a polymeric composition containing poly-$\alpha$-olefin (e.g., polyethylene) and one or more of the VSAs described above. In other words, the inner layer can be an insulating layer and/or a shielding layer, one or both of which contain the present polymeric composition.

The present coated conductor may comprise two or more embodiments disclosed herein.

DEFINITIONS

The "AC breakdown strength" of an insulator is the minimum voltage that causes a portion of an insulator to become electrically conductive, measured according to the procedure provided in the Test Methods section, below.

"Cable" and like terms is at least one wire or optical fiber within a protective insulation, jacket or sheath. Typically, a cable is two or more wires or optical fibers bound together, typically in a common protective insulation, jacket or sheath. The individual wires or fibers inside the jacket may be bare, covered or insulated. Combination cables may contain both electrical wires and optical fibers. The cable, etc. can be designed for low, medium and high voltage applications. Typical cable designs are illustrated in USP 5,246,783, 6,496,629 and 6,714,707.

"Composition" and like terms mean a mixture or blend of two or more components. The term "composition," as used herein, includes a mixture of materials which comprise the composition, as well as reaction products and decomposition products formed from the materials of the composition.

The term "comprising," and derivatives thereof, is not intended to exclude the presence of any additional component, step or procedure, whether or not the same is disclosed herein. In order to avoid any doubt, all compositions claimed herein through use of the term "comprising" may include any additional additive, adjuvant, or compound whether polymeric or otherwise, unless stated to the contrary. In contrast, the term, "consisting essentially of' excludes from the scope of any succeeding recitation any other component, step or procedure, excepting those that are not essential to operability. The term "consisting of' excludes any component, step or procedure not specifically delineated or listed. The term "or", unless stated otherwise, refers to the listed members individually as well as in any combination.

A "conductor" is an element of elongated shape (wire, cable, fiber) for transferring energy at any voltage (DC, AC, or transient). The conductor is typically at least one metal wire or at least one metal cable (such as aluminum or copper) but may include optical fiber.

"Crosslinked," "cured" and similar terms mean that the polymer, before or after it is shaped into an article, was subjected or exposed to a treatment which induced crosslinking and has xylene or decalene extractables of less than or equal to 90 weight percent (i.e., greater than or equal to 10 weight percent gel content).

An "insulating layer" is a layer having a volume resistivity greater than $10^{10}$ ohm-cm, or greater than $10^{12}$ ohm-cm.

A "layer," as used herein, is a polymer-based layer surrounding the conductor, for example, an electrically insulating layer, a semiconductive layer, a sheath, a protective layer, a water blocking layer, or a layer performing combined functions, for example, a protective layer charged with a conductive filler.

The term "medium voltage" generally means a voltage of between 6 kV and about 36 kV, whereas "high voltage" means voltages higher than 36 kV, and "extra high voltage" generally means voltages greater than 220 kV. The skilled artisan understands that these general voltage ranges may be different outside of the United States.

The term "opaque," as used herein, is a material that blocks at least natural light (i.e., sunlight). In other words, an opaque material is impenetrable to light energy having a wavelength from about 250 nm to about 800 nm.

The term "polymer" is a macromolecular compound prepared by polymerizing monomers of the same or different type. "Polymer" includes homopolymers, copolymers, terpolymers, interpolymers, and so on. The term "interpolymer" is a polymer prepared by the polymerization of at least two types of monomers or comonomers. It includes, but is not limited to, copolymers (which usually refers to polymers prepared from two different types of monomers or comonomers, terpolymers (which usually refers to polymers prepared from three different types of monomers or comonomers), tetrapolymers (which usually refers to polymers prepared from four different types of monomers or comonomers), and the like.

A "shielding layer" may be semiconductive or resistive. A shielding layer having semiconductive properties has a volumetric resistivity value, of less than 1000 $\Omega$-m, or less than 500 $\Omega$-m, when measured at 90°C. A shielding layer having resistive properties has a volumetric resistivity value greater than a semiconductive layer. A shielding layer having resistive properties typically has a dielectric constant greater than about 10.

TEST METHODS

*AC Breakdown Strength Measurement*

The AC breakdown strength measurements are performed using an apparatus utilizing needles with a tip radius of 1 $\mu$m (0.5-mm diameter, 1.5-inch length) and a large flat copper plate. For each test a staircase step ramp method (1 kV every 30 minutes) is used to increase in applied voltage up to a maximum 15 kV available voltage or until a breakdown is detected. "Breakdown" is defined as the point where the voltage read by the power source suddenly drops to below 10% of the set value. This AC breakdown test procedure is very similar to ASTM D3756-97 (for AC tests). The AC breakdown strength is the voltage at which the sample failed normalized to thickness. The ASTM method suggests five measurements per sample for an adequate standard deviation; however, early tests revealed that the standard deviation does not level until approximately ten or more tests are conducted, while the standard error continues to drop further. As a compromise between standard error and time, ten measurements are made for each sample, and an average value is provided as the AC breakdown strength of the material. The value of $E_{BD}$ (breakdown field at the tip of the needle) is calculated using the following equation:

$$E_{BD} = E_{CRIT} = \frac{2 * V_{BD}}{r * \ln\left(1 + \left(\frac{4d}{r}\right)\right)}$$

where $V_{BD}$ is the observed breakdown voltage, r is the radius of the needle tip (r = 1 $\mu$m) and d is the distance from the needle tip to the flat electrode (d = 2 mm). The data is fitted using a 2-parameter Weibull failure distribution model to calculate the characteristic breakdown strength values.

*Cable Breakdown Measurements*

Manufactured cables are tested in accordance to the high-voltage time test procedure listed in the ICEA S-94-649-2004 standard.

EXAMPLES

*Sample Preparation*

Polyethylene ("PE") (density: 0.92 g/cc; melt index ($I_2$): 2.0 g/10 min.) is melt fluxed in a Brabender mixing bowl, after which the voltage-stabilizing additive is melt-compounded into the polyethylene at a target mix temperature of 200 °C and 60 rpm for 10 minutes to insure adequate incorporation. Materials are subsequently removed from the mixing bowl and compression molded (5,000 lbs for 5 min at 200 °C, then pressed at 12,000 lbs for 5 min at 200 °C, then pressed to 20,000 lbs for 5 min at 200 °C) into 4"x 4"x 0.25" slabs for evaluation of electrical properties.

1-inch square specimens are die-cut from the slab and pre-drilled to a depth of 0.5 inches along one of the major axes. Tungsten needles (1-$\mu$m tip radius) are inserted into the pre-drilled holes and placed into a jig to complete the insertion at elevated temperature. The entire jig is conditioned in a circulating air oven for 1 hour at 105 °C, after which the needle is advanced into the softened polymer at a rate of approximately 1 mm every 5 minutes while remaining in the 105 °C oven. The needles are advanced to a stop which produces a point-to-plane distance of approximately 2 mm.

*Examples 1-5 and Comparative Sample A*

Example 1 is LDPE containing 0.5 wt% of di-n-octyl phthalate, which is commercially available from Sigma Aldrich Corporation, St. Louis, MO, USA. The LDPE employed in this example is LDPE DXM-446 from The Dow Chemical Company, Midland, MI, USA.

Example 2 is LDPE containing 0.5 wt% di-nonyl phthalate, which is commercially available from Sigma Aldrich Corporation, St. Louis, MO, USA. The LDPE employed in this example is the same as described in Example 1.

Example 3 is LDPE containing 0.5 wt% hexyl benzoate, which is commercially available from Sigma Aldrich Corporation, St. Louis, MO, USA. The LDPE employed in this example is the same as described in Example 1.

Example 4 is LDPE containing 1.0 wt% hexyl benzoate, which is commercially available from Sigma Aldrich Corporation, St. Louis, MO, USA. The LDPE employed in this example is the same as described in Example 1.

Comparative Example 5 is LDPE containing 0.5 wt% trioctyl trimellitate, which is commercially available from Sigma Aldrich Corporation, St. Louis, MO, USA. The LDPE employed in this example is the same as described in Example 1.

Comparative Sample A is LDPE with no voltage-stabilizing agent. The LDPE employed in Comparative Sample A is the same as described in Example 1.

Examples 1-5 and Comparative Sample A are analyzed for AC breakdown strength according to the above-described procedure. Results are provided in Table 1, below:

**Table 1 - Breakdown Strength Analysis**

| Samples | Additive name | Average AC Breakdown strength, (KV/mm) | 90% Confidence Intervals (KV/mm) | % Breakdown strength improvement |
|---|---|---|---|---|
| Comparative Sample A | none | 2,009 | 1908-2109 | - |
| Example 1 | di-n-octyl phthalate | 2,450 | 2323-2576 | 22 |
| Example 2 | dinonyl phthalate | 2,642 | 2436-2851 | 32 |
| Example 3 | hexyl benzoate (0.5 wt%) | 2,370 | 2132-2623 | 18 |

(continued)

| Samples | Additive name | Average AC Breakdown strength, (KV/mm) | 90% Confidence Intervals (KV/mm) | % Breakdown strength improvement |
|---|---|---|---|---|
| Example 4 | hexyl benzoate (1.0 wt%) | 2,278 | 2054-2513 | 13 |
| Comparative Example 5 | trioctyl trimellitate | 2,826 | 2559-3100 | 41 |

Each of the voltage-stabilizing additives investigated provide a significant improvement in the AC breakdown strength of the polyethylene compared to the neat polymer.

*Cable Preparation*

The Comparative Sample A and Comparative Example 5 compositions are utilized to manufacture 15-kV cable cores using a 1+2 extrusion configuration method. A 1/0-19w aluminum conductor is used with a target of 15 mil of conductor shield, 175 mil of insulation, 40 mil of insulation shield. The conductor shield is extruded first with a 2.5-inch extruder, followed by co-extrusion of the insulation and insulation shield with 4.5-inch and 3.5-inch extruders respectively, and followed by dry-nitrogen cure. Heavy copper mesh neutrals are applied for the purposes of conducting electrical testing. Pre-conditioning is performed for 72 hours at 90 °C to remove any crosslinking byproducts. However, no difference is anticipated between pre-conditioned and un-aged cables, since a significant amount of time lapse is allowed in between cable manufacturing and cable testing due to logistical issues. Hence the results are analyzed as a group to calculate the characteristic breakdown strength. Nominal breakdown results are provided in Table 2, below:

**Table 2 - Breakdown Strength Analysis for Cables**

| Comparative Sample A | | Comparative Example 5 (TOTM) | |
|---|---|---|---|
| Unaged BD (V/mil) | Preconditioned BD (72 Hrs @ 90°C) (V/mil) | Unaged BD (V/mil) | Preconditioned BD (72 Hrs @ 90°C) (V/mil) |
| 534 | 759 | 755 | 1140 (T) |
| 662 | 552 | 816 | 744 |
| 659 | 689 | 893 | 1100 (T) |
| 659 | 618 | 915 | 1140 (T) |
| 940 (T) | 700 | 940 | 599 |
| T - refers to termination failure | | | |

The data in Table 2 is fitted using a 2-parameter Weibull failure distribution model, and termination-failed samples are regarded as suspensions. The characteristic breakdown strength of Comparative Example 5 is found to be 948 V/mil as compared to 693 V/mil of Comparative Sample A. This shows a 37% improvement in AC breakdown strength.

**Claims**

1.  A polymeric composition, comprising:

    a low density polyethylene; and
    an organic carboxylic ester comprising at least one aromatic ring and from 1 to 2 carboxylic alkyl ester substituents, wherein said organic carboxylic ester is selected from the group consisting of dioctyl phthalate, dinonyl phthalate, hexyl benzoate, and combinations thereof; and wherein said organic carboxylic ester is present in said polymeric composition in an amount ranging from 0.1 to 2 weight percent based on the combined weight of said low density polyethylene and said organic carboxylic ester.

2. The polymeric composition of claim 1, wherein said low density polyethylene is crosslinked.

3. The polymeric composition of any one of the foregoing claims, wherein said organic carboxylic ester has a single aromatic ring and is selected from the group consisting of dioctyl phthalate, dinonyl phthalate and hexyl benzoate.

4. A coated conductor, comprising:

a conductor; and
a dielectric insulating layer,
wherein said dielectric insulating layer comprises the polymeric composition of any one of the foregoing claims.

**Patentansprüche**

1. Eine Polymerzusammensetzung, die Folgendes beinhaltet:

ein Polyethylen niedriger Dichte; und
einen organischen Carboxylester, der mindestens einen aromatischen Ring und 1 bis 2 Carboxylalkylestersubstituenten beinhaltet, wobei der organische Carboxylester ausgewählt ist aus der Gruppe, bestehend aus Dioctylphthalat, Dinonylphthalat, Hexylbenzoat und Kombinationen davon; und wobei der organische Carboxylester in der Polymerzusammensetzung, bezogen auf das kombinierte Gewicht des Polyethylens niedriger Dichte und des organischen Carboxylesters, in einer Menge im Bereich von 0,1 bis 2 Gewichtsprozent vorhanden ist.

2. Polymerzusammensetzung gemäß Anspruch 1, wobei das Polyethylen niedriger Dichte vernetzt ist.

3. Polymerzusammensetzung gemäß einem der vorhergehenden Ansprüche, wobei der organische Carboxylester einen einzelnen aromatischen Ring aufweist und ausgewählt ist aus der Gruppe, bestehend aus Dioctylphthalat, Dinonylphthalat und Hexylbenzoat.

4. Ein beschichteter Leiter, der Folgendes beinhaltet:

einen Leiter; und
eine dielektrische Isolierschicht,
wobei die dielektrische Isolierschicht die Polymerzusammensetzung gemäß einem der vorhergehenden Ansprüche beinhaltet.

**Revendications**

1. Une composition polymère, comprenant :

un polyéthylène basse densité ; et
un ester carboxylique organique comprenant au moins un noyau aromatique et de 1 à 2 substituants ester d'alkyle carboxylique, ledit ester carboxylique organique étant sélectionné dans le groupe constitué de phtalate de dioctyle, de phtalate de dinonyle, de benzoate d'hexyle, et de combinaisons de ceux-ci ; et ledit ester carboxylique organique étant présent dans ladite composition polymère en une quantité comprise dans la gamme allant de 0,1 à 2 pour cent en poids rapporté au poids combiné dudit polyéthylène basse densité et dudit ester carboxylique organique.

2. La composition polymère de la revendication 1, dans laquelle ledit polyéthylène basse densité est réticulé.

3. La composition polymère de n'importe laquelle des revendications précédentes, dans laquelle ledit ester carboxylique organique a un noyau aromatique unique et est sélectionné dans le groupe constitué de phtalate de dioctyle, de phtalate de dinonyle et de benzoate d'hexyle.

4. Un conducteur enrobé, comprenant :

un conducteur ; et
une couche isolante diélectrique,
dans lequel ladite couche isolante diélectrique comprend la composition polymère de n'importe laquelle des revendications précédentes.

# Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US P5246783 A
- US 6496629 B
- US 6714707 B